(19) Europäisches Patentamt
European Patent Office
Office européen des brevets

(11) Publication number: **0 310 691 B1**

(12) **EUROPEAN PATENT SPECIFICATION**

(45) Date of publication of patent specification: **12.02.92**

(51) Int. Cl.5: **C08F 8/30**, C09D 5/44, C09D 123/36

(21) Application number: **87114538.9**

(22) Date of filing: **05.10.87**

(54) **Pigmented low temperature cure emulsions.**

(43) Date of publication of application:
**12.04.89 Bulletin 89/15**

(45) Publication of the grant of the patent:
**12.02.92 Bulletin 92/07**

(84) Designated Contracting States:
**DE FR GB**

(56) References cited:
**EP-A- 0 132 698**
**US-A- 4 064 191**
**US-A- 4 442 257**
**US-A- 4 544 609**

(73) Proprietor: **THE GLIDDEN COMPANY**
**900 Huntington Building 925 Euclid Avenue**
**Cleveland Ohio 44115(US)**

(72) Inventor: **Hahn, Kenneth G., Jr.**
**60 Bellus Road**
**Hickley Ohio(US)**

(74) Representative: **Baillie, Iain Cameron et al**
**c/o Ladas & Parry, Altheimer Eck 2**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

### BACKGROUND OF THE INVENTION

This invention pertains to clear or pigmented emulsion coatings treated by cation exchange where the emulsion polymers contain hydroxyl or carboxyl groups but are free of amine groups. The stable reactive coating is based on ion-exchange of a water dispersed mixture of glycoluril resin and acrylic emulsion polymer, where the emulsion polymer contains carboxyl and/or hydroxyl groups but is free of amine groups.

Prior to this invention, glycoluril cured thermosetting emulsions were produced from non-ionic and acidic surfactants and generally required high levels of such surfactants. Anionic salt surfactants cause a detriment to the curing reaction. Further, pigmentation of such glycoluril and emulsion mixtures caused undesirable flocculation during the pigment grind step and subsequent let-down to produce pigmented mixtures.

Prior art U.S. Patents 4,442,257 and 4,444,941 teach the use of certain acrylic latexes crosslinked with either tetramethylol glycoluril (TMGU) or dihydroxy dimethylol ethylene urea (DDEU) for low-temperature curing coatings. Rapid cure is achieved with these products by adding from 1.5% to 3.5% by weight of a 40% solution of paratoluene sulfonic acid where a package pH of about 1.0 to 2.0 results. Stability of these catalyzed products ordinarily is limited to 1-5 days at room temperature, and much less at elevated temperatures. Hence, the acid catalyst must be added at the time of use, which can be dangerous since the acid is quite corrosive. Cured films of such polymer mixture often exhibit certain water sensitivity due to residual catalyst in the cured films. Without the catalyst, however, the coating has no solvent or water resistance unless baked at extremely high temperatures.

Abbey (U.S. 4,525,260) discloses a cationic latex for cathodic electrocoating that contains amine functionality. The reference latex is based on acrylic monomers copolymerized with amine monomers, such as N,N-dimethyl-2-aminoethyl methacrylate, and catalyzed with an azo catalyst. The presence of the amine functionality either as a structural part of the latex or solvent or to the surface of the latex provides the latex with cation-activity required for electrocoating. Abbey subsequently treats the cationic latex with an ion exchange resin to remove amino monomers and amino initiator fragments. Hence, the reference is specifically directed to removing amino fragments introduced in the emulsion process. As noted below, amine latexes are not operative in this invention in that amine groups block coreactivity with a glycoluril cross-linker and inhibit the cure.

It now has been found that stable clear and pigmented emulsion dispersions containing glycoluril-type cross-linkers can be produced by using conventional surfactants, where the mixture is subsequently subjected to cationic exchange to remove the cations from the anionic surfactant as well as from other sources. The emulsion polymer specifically contains hydroxyl and/or carboxyl groups but not amine groups. Amine groups block reactivity, inhibiting cure and render the process of this invention inoperative. In accordance with this invention, the resulting cationic exchange step produces a clear emulsion mixture adapted to cure without the addition of acid catalysts such as p-toluenesulfonic acid. Hence, the disadvantages associated with the use of external acid catalysts are overcome by this invention. Dynamic mechanical analysis further demonstrates that the cure achieved by ion exchange is faster than by acid catalysis. The pigmented or clear mixtures exhibit excellent uninhibited cure with long-term viscosity stability. Accordingly, basic conventional surfactants used as the dispersant enables a dilatent free grind in producing the pigmented emulsion. Upon cation exchange treatment of the glycoluril and emulsion polymer dispersion, the mixture is stable against settling and exhibits no flocculation. In accordance with this invention, the ion-exchange process utilizes a proton-substituted cation exchange resin to remove cations rather than use detrimental external acid catalysts to effect the crosslinking reaction. This process unexpectedly yields a liquid coating with long-term package stability as compared with the acid-catalyzed liquid coating which reacts quickly but typically destabilizes and gels in 1-5 days at room temperature. The improved clear or pigmented emulsion coatings of this invention are indefinitely stable at room temperature yet, upon drying, cure at room temperature to give a fully crosslinked film.

### SUMMARY OF THE INVENTION

Briefly, the invention pertains to a stabilized clear or pigmented aqueous dispersion suitable for coating or primer coating of wood which comprises, water, one or more acrylic or acrylic-modified binder latexes, and a crosslinking agent adapted to cure with said binder latexes. The acrylic emulsion polymer contains hydroxyls or carboxyls but is free of amine groups. The composition is produced by first compounding the glycoluril and emulsion polymer dispersion and then treating the same with an ion exchange resin,

preferably a cation exchange resin, individually or together, to provide coatings having superior storage stability and which cure without the addition of acid cure catalyst. The present invention provides a stable clear or pigmented coating which, when dried at room temperature or heated in a baking oven, reacts to form a crosslinked film with good performance properties.

Such compositions may produce coatings as a result of coalescence of the reactive emulsion polymer and by cross-linking between the reactive emulsion polymer and glycoluril.

Accordingly the present invention provides a process for the production of a functionally reactive emulsion polymer by copolymerizing functional-group containing ethylenically unsaturated monomers in an aqueous medium characterized in that said functional-group-containing ethylenically unsaturated monomers do not include amine monomers and that the functional emulsion polymer is treated with an ion exchange resin to remove cations and produce a product having a pH of less than 2.5.

## DETAILED DESCRIPTION OF THE INVENTION

In accordance with this invention, a post ion-exchange treatment of aqueous dispersions of glycoluril and emulsion polymer is affected to remove cations from the dispersions. Post ion-exchange treatment is best effected with protonated cation exchange resin. Protonated cation exchange resin typically comprises crosslinked macroreticular polystyrene beads having sulfonic acid surface groups, that is, the beads have a sulfonated surface. Bead sizes are typically about 1 millimeter in diameter more or less. In the present invention, the coating is not externally catalyzed, but is brought into intimate contact with a protonated cation exchange resin, such as Amberlite 200 CH from Rohm and Haas. This contact can be effected by adding from 1%-100% by weight of the exchange resin to the coating with agitation and mixing until the pH has stabilized below 2.5, and typically around 1.2-1.8. The mixture can be strained through a filter medium such as linen cloth of a size small enough to remove all of the solid exchange resin, whereby the filtered coating exhibits no changes in pH or viscosity over 3 months or longer. Optionally, the coating can be passed over a column bed of the exchange resin at a rate which yields a coating pH of less than 2.5, preferably around 1.2-1.8. Again, no change in stability or in pH or viscosity is apparent over a 3-month period.

Referring to the reactive emulsion polymer, the reactive polymer contains reactive hydroxyl, carboxyl, amido or methylolamido groups which can react with said glycoluril cross-linking agent, but is free of amine groups. Such ethylenically unsaturated monomers include acrylic monomer, styrene-acrylic monomers, vinyl acetate, vinyl chloride, vinylidene chloride and mixtures thereof. The emulsion polymer comprises copolymerized ethylenically unsaturated monomers including at least about 2% copolymerized reactive monomers of acrylamide, carboxyl monomer, or hydroxyl monomer. The acrylamide monomers can be acrylamide, methacrylamide, ethyacrylamide; and similar alkyl acrylamide and methacrylamide monomers including for example, N-methylol acrylamide, N-ethanol acrylamide, N-propanol acrylamide, N-methylol methacrylamide, N-ethanol methacrylamide, and similar acrylamide and methacrylamide monomers. Carboxyl containing monomers are ethylenically unsaturated monomers containing carboxyl groups, including lower alkyl acrylate or methacrylate monomers such as acrylic, methacrylic, or ethacrylic acid. Other useful carboxyl reactants include itaconic, citriconic, fumaric, maleic, mesaconic and aconitric acids. The preferred acids are acrylic and methacrylic acids. Hydroxyl containing monomers are ethylenically unsaturated monomers containing a hydroxyl group and can include for example, hydroxy alkyl acrylates or methacrylates such as hydroxyethyl, hydroxypropyl, hydroxybutyl, hydroxyhexyl, hydroxyoctyl and similar lower alkyl hydroxy acrylates and methacrylates. Ethylenically unsaturated monomers other than acrylamide, carboxyl, and hydroxyl monomers can include vinyl unsaturated monomers containing vinyl double bond unsaturation including, for example, vinyl esters such as vinyl acetate, vinyl propionate, vinyl butyrates, vinyl benzoate, isopropenyl acetate and like vinyl esters; vinyl amides, such as acrylamide and methacrylamide; and vinyl halides such as vinyl chloride. Ethylenically unsaturated monomers other than vinyl unsaturated monomers can include, for example, styrene, methyl styrenes and similar alkyl styrenes, chlorostyrene, vinyl toluene, vinyl naphthalene, divinyl benzene, diallyl phthalate and similar diallyl derivatives, butadiene, alkyl esters of acrylic and methacrylic acid and similar ethylenically unsaturated monomers. Acrylic unsaturated monomers include alkyl esters of acrylic or methacrylic acid having an alkyl ester portion containing between 1 to 12 carbon atoms as well as aromatic derivatives of acrylic and methacrylic acid, and can include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, and various reaction products such as butyl, phenyl, and cresyl glycidyl ethers reacted with acrylic and methacrylic

acids. The ethylenically unsaturated monomers can be copolymerized by free radical induced addition polymerization using peroxy catalyst, common redox catalyst, ultraviolet radiation.

Preferred latex binders for this invention are acrylic or modified acrylic binders such as set forth in U.S. 4,444,941 and U.S. 4,442,257, provided the emulsion polymer is free of amine groups. A preferred emulsion polymer free of amine groups preferably comprises by weight between 20% and 95% acrylate or methacrylate monomers, 0% and 20% functional monomer selected from a carboxyl monomer, a hydroxyl monomer, or acrylamide monomer, or mixtures of such functional monomers, and 0% to 50% other ethylenically unsaturated monomer. A preferred emulsion polymer comprises a latex polymer consisting of copolymerized monomers of 20%-50% methyl methacrylate, 0%-20% ethyl acrylate, 20%-50% butyl acrylate, and 1%-20% of a hydroxyl-bearing monomer.

Conveniently the ethylenically unsaturated monomers comprise as a weight basis from 0 to 10% carboxylic monomer, from 2 to 20% alkylhydroxy, acrylate or methacrylate monomer, the balance being other ethylenically unsaturated monomers selected from vinyl monomers, styrene monomers and acrylate monomers.

The reactive emulsion polymer containing reactive hydroxyl, carboxyl, or acrylamide groups can be cross-linked by reaction with a glycoluril derivative. Glycoluril derivatives are disclosed in U.S. Pat. No. 4,064,191 and are also known as acetyleneureas. Glycolurils are derived by reacting two moles of urea with one mole of glyoxal to provide a complex ring structure as shown in U.S. 4,540,735; where substitute constituents can be a hydrogen, or a lower alkyl radical, or can be methylolated partially or fully by reacting with 1 to 4 moles of formaldehyde to provide a methylol glycoluril. The preparation of various glycolurils are illustrated in U.S. Patent No. 4,064,191 such as tetramethylol glycoluril, tetrabutoxymethyl glycoluril, partially methyolated glycoluril, tetramethoxymethyl glycoluril, and dimethyoxydiethoxy glycoluril. Useful glycoluril derivatives include for example, mono- and dimethylether of dimethylol glycoluril, the trimethylether of tetramethylol glycoluril, the tetramethylether of tetramethylol glycoluril, tetrakisethoxymethyl glycoluril, tetrakisopropoxymethyl glycoluril, tetrakisbutoxymethyl glycoluril, tetrakisamyloxymethyl glycoluril, tetrakishexoxymethyl glycoluril. Glycoluril derivatives can further include dimethylol dihydroxyl ethylene urea which is believed to have the chemical structure as follows:

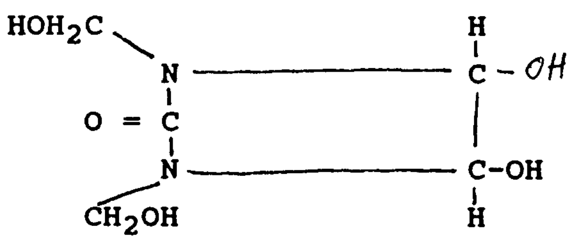

This glycoluril may particularly be used when the unsaturated monomers comprise 0 to 10% carboxylic monomer and from 2 to 20% alkylhydroxy acrylate or methacrylate as described above.

In practice, the ethylenic monomers can be polymerized in an aqueous medium at a pH preferably between about 1.0 and 6 to form a reactive emulsion polymer. Generally, the polymerization is conducted at a temperature of about 20°-100°C. in the presence of a free radical generating initiator. Commonly used free radical initiators include various peroxygen compounds such as the persulfates, benzoyl peroxide, t-butyl hydroperoxide, cumene hydroperoxide, di-t-butyl perphthalate, pelargonyl peroxide and 1-hydroxycyclohexyl hydroperoxide. Particularly preferred as polymerization initiators are the water-soluble peroxygen compound such as hydrogen peroxide and the sodium, potassium and ammonium persulfates used by themselves or in activated "redox" type systems. Typical "redox" systems include alkali metal persulfates with a reducing substance such as a polyhydroxy phenol. The amount of initiator used will generally be in the range between about 0.1 to 3% by weight based on the monomers and preferably is maintained between 0.15 and 1% by weight of the monomers. Usually the initiator will all be charged at the outset of the polymerization; however, incremental addition or proportioning of the initiator is often employed.

Emulsifiers used to prepare the latices of this invention are the general types of anionic and non-ionic emulsifiers. Exemplary anionic emulsifiers which may be employed are: alkali metal or ammonium salts of the sulfates of alcohols having from 8 to 18 carbon atoms, such as sodium lauryl sulfate, ethanolamine lauryl sulfate, ethylamide lauryl sulfate; alkali metal and ammonium salts of sulfonated petroleum or paraffin oils, sodium salts of aromatic sulfonic acids, such as dodecan-1-sulfonic acid and octadiene-1-sulfonic acid; aralkylsulfonates such as sodium isopropyl benzene sulfonate, sodium dodecyl benzene sulfonate and

sodium isobutyl naphthalene sulfonate; alkali metal and ammonium salts of sulfonated dicarboxylic acid esters such as sodium dioctyl sulfosuccinate, disodium N-octadecylsulfosuccinamate; alkali metal or ammonium salts of free acids of complex organic mono- and diphosphate esters. So-called nonionic emulsifiers such as octyl- or nonylphenyl polyethoxyethanol may also be used.

The amount of emulsifier used can be from about 0.01 to 6% or more by weight of the monomers. All of the emulsifier may be added at the beginning of the polymerisation or may be added incrementally or by proportioning throughout the run. Typical polymerizations for the preparation of the emulsion polymers of this invention are conducted by charging the monomers into the polymerisation reactor which contains water and a portion of the emulsifying agent. The reactor and its contents are heated and the initiator added.

A coating is prepared by blending from about 20 to 95 parts of emulsion polymer with from about 5 to 80 parts of one of the aforementioned crosslinking glycoluril derivatives, preferably about 70 to 95 parts of emulsion polymer with about 5 to 30 parts of crosslinker. Typically said emulsion polymer contains reactive hydroxy, carboxyl or acrylamide groups adapted to be coreactive with glycoluril where said emulsion polymer is free of amine groups and said composition is produced by treating the coating composition to substantially remove the cations from the emulsion polymer and the glycoluril. The polymeric mixture of this invention advantageously avoids the problems associated with prior art coatings catalyzed with 1-4% of 40% paratoluene sulfonic acid. Stability of such prior art mixtures was limited to about 1-5 days in the best of cases, and, with many latex blends agglomeration occured within seconds of catalysis.

In accordance with this invention, a very clear coating or uniform dispersion of pigments can be obtained, using conventional anionic and nonionic surfactants, whereupon cations are subsequently removed by batch exchanging with Amberlite 200 CH resin, lowering the pH to less than 2.0. When such cation exchange resins are employed, unpigmented emulsion polymer may be prepared initiately having a basic pH which is later converted to an acid latex by use of the cation exchange resin. This dispersion is stable and shows no flocculation when combined with ion-exchanged glycoluril or aminoplast. Accordingly, a stable dispersion can be made using conventional surfactants which subsequently can be acidified by cation exchange to provide compatibility and stability in let down steps and pigment grinds if desired. Conventional basic surfactant can be used as the dispersant to enable a dilatent-free pigment grind. Cation exchange prevents settling and flocculation and further prevents cure inhibition in the final paint.

The present invention permits the production of a latex having a pH of less than 2.5 that does not gel or destabilize at room temperature but which is heat curable at from 60 to 350?F. (18 to 176 °C.) without addition of acid cure catalyst.

The following examples, wherein percentages are by weight, further illustrate the merits of this invention.

The following Examples 1-8 are clear coatings.

EXAMPLE 1

(a) Latex.

An emulsion polymer was produced from the following components:

| | Grams |
|---|---|
| Deionized Water | 85.6 |
| Sodium Dihexyl Sulfosuccinate | 0.5 |
| Potassium Carbonate | 0.136 |
| Ammonium Persulfate | 0.273 |
| Sodium Bis-tridecyl Sulfosuccinate | 0.319 |
| Butyl Acrylate | 39.0 |
| Methyl Methacrylate | 39.0 |
| N-isobutoxymethylol Acrylamide | 12.0 |
| 2-hydroxyethyl Acrylate | 6.0 |
| Glacial Methacrylic Acid | 4.0 |
| Sodium Formaldehyde Sulfoxilate | 0.180 |
| Tertiary Butyl Hydroperoxide | 0.012 |

The emulsion polymer is prepared as follows. The monomers are polymerized in a conventional reactor

using a standard procedure of metering in the main body of monomer into the heated water plus surfactant and potassium carbonate over 2- to 5-hour intervals. Batch loading of monomer is possible but not preferred. Changing the monomer composition during the feed is also possible and may lead to faster cure and/or cleaner batches. The reaction is run at 60°-86°C. The sodium formaldehyde sulfoxilate and t-butyl hydroperoxide are added after the main body of monomers have been polymerized in order that traces of free monomers are reacted. The emulsion polymer latex is particularly suitable as a binder system for a paint composition. The latex has an N.V. content of 52% by weight; a density of 8.9 lb./gallon (1066 kg/$m^3$); and has a pH of 3.1.

(b) Clear Coating.

The foregoing latex (a) can be utilized to produce a useful paint composition which can be applied to a substrate and cured at low temperatures such as 10 minutes at 120°F. (49°C.), or an oven bake and/or infrared heat to achieve a substrate surface temperature of from about 100°F. (38°C.) to about 260°F (126°C.). A typical paint composition is as follows:

| | Grams |
|---|---|
| Latex (a) | 666 |
| Cymel 1175[1] | 175 |
| Foamaster O (defoamer) (2) | 1 |
| Isopropanol | 34 |
| Butyl Cellosolve[3] | 20 |

[1]Dihydroxy dimethylol ethylene urea, 45% N.V. (American Cyanamid Company).
[2]Diamond Shamrock Corporation.
[3]Union Carbide Corporation.

This coating with a pH of 4.2 was used as control without further cure additives.

## EXAMPLE 2

Two hundred grams of the coating of Example 1 were combined with 7.0 grams of 40% paratoluene sulfonic acid in isopropanol. The product exhibited a pH of 1.1.

## EXAMPLE 3

While mixing the coating of Example 1, 200 grams thereof were combined with 100 grams Amberlite 200 CH (macroreticular, strongly acidic, cation exchange resin from Rohm and Haas Corporation). After stirring for 30 minutes, the coating was strained through linen cloth to remove the cation exchange resin. The product had a pH of 1.5.

## EXAMPLE 4

Three mil (76.7 µm) wet films of coatings Examples 1, 2, and 3 were cast on glass substrate and baked under various conditions to profile relative cure properties. The results are shown in Table I.

**Table I**
**Comparative Cure Tests**

| Test | Cure Time/°F. | Example 1 | Example 2 | Example 3 |
|---|---|---|---|---|
| Methyl ethyl ketone (MEK) rubs | | 80 | >200 | >200 |
| Water spot | 2 min./330° (166°C.) | 75 seconds, dissolved | 15 minutes, no effect | 15 minutes, no effect |
| MEK rubs | 30 sec./350° (176°C.) | 8 | 200, softens | 200, softens |
| $H_2O$ spot | | 15 seconds, dissolved | 15 minutes, slight softening | 15 minutes slight softening |
| MEK rubs | (a) | --- | 50 | 80 |
| $H_2O$ spot | | | 3 minutes, softened | 3 minutes, softened |

(a) Cast films exposed to low-intensity electric infrared for 90 seconds to full dry (panel temperature 130°F. [54°C.]). Panels were cooled seven minutes before testing.

EXAMPLE 5

Product Stability Test

Samples of Example 2 and Example 3 products were placed in closed vials in a 140° F. (60° C.) oven to measure package stability. Example 2 product gelled in about 30 minutes and was discarded. Example 3 product remained liquid after 11 days and showed cure equivalent to the unaged sample.

Viscosity Stability

Viscosities were determined using a Brookfield LVT viscosimeter, #4 spindle, at 30 RPM.

| | Example 2 (cps) | Example 3 (cps) |
|---|---|---|
| Initial viscosity | 7,200 (7.2 Pas) | 4,200 (4.2 Pas) |
| 20 Hours at 72° F. (22° C) | 18,800 (18.8 Pas) | 4,500 (4.5 Pas) |

Solvent Resistance on Hardboard

Two mil (50.8 µm) wet films of Example 2 and Example 3 products were cast on smooth, medium-density hardboard and exposed to high-intensity electric infrared heat for 60 seconds. Surface temperature reached about 160° F. (71° C.). On cooling both coatings were hard and tough and both exhibited >100 MEX rubs of solvent resistance.

EXAMPLE 6

A 1/2-gallon (1.89 1) sample of coating (a) of Example 1 was prepared.

A one-inch (25.4mm) diameter glass column, 12 inches (305mm) in height, was packed with the Amberlite 200 CH cation exchange resin and fitted with feed and exit lines to allow the coating to enter from the bottom, diffuse through the packed resin beads, and exit from the top to a receiving chamber.

The coating was propelled through the system by air pressure in a feed vessel. Flow rate was regulated by the air pressure. The coating was run through the cation exchange column at a flow rate of 6 $cm^3$/minute. Inlet pH was 4.2; outlet pH was 1.5.

Samples of this coating and acid-catalyzed control were cast on smooth, medium-density hardboard to a dry film thickness of 1.5 mils (38.1μm). They were baked to a final cure temperature of 300° F. (149° C.) with electric infrared.

The coated boards were tested for water vapor transmission.

| | Water Vapor Permeance* |
|---|---|
| Control | 4.3 |
| Example 6 | 4.2 |

*Grains water/hour/square foot/inch Hg differential pressure.

Although the panel of Example 6 and the control gave identical water protection, the control showed excessive viscosity buildup.

EXAMPLE 7

A sample of coating (a) of Example 6 was allowed to age 37 days at room temperature.

0.5-0.7 (13-18μm) Mil dry films were cast on Leneta paper and placed in baking ovens at 100° F. (38° C.) and 120° F. (49° C.) for 13 minutes. Cure by MEK rubs was measured immediately and after 1/2 hour and one hour of post-bake aging.

| Oven Temp. | Initial MEK Rubs | 1/2 Hour Aged MEK Rubs | 1 Hour Aged MEK Rubs | 15 Min. Aged $H^2O$ Spot |
|---|---|---|---|---|
| 100° F. (38° C.) | 40-50 | 50 | 50 | 15 softens |
| 120° F. (49° C.) | 60-75 | 100 | 100 | 15 softens |

Another sample of coating (a) of Example 6 aged 37 days was brush-applied to a piece of smooth, medium-density hardboard and allowed to dry at room temperature (approximately 72° F. [22° C.], 50% R.H.). Film thickness was estimated to average 1.5 mils (38.1 μm).

| Time After Brush-Out | MEK Rubs |
|---|---|
| 1 Hour (completely dry) | 5 |
| 4 hours | 12 |
| 19 hours | 35 |
| 24 hours | 45 |
| 43 hours | 45 |
| 67 hours | 45 |
| 9 Days | 50 |
| 17 Days | 125 |

This demonstrates the ability of this system to achieve room temperature cure although stable in the liquid form at the same temperature.

EXAMPLE 8

A modified acrylic latex was prepared in a manner similar to Example 3 using N-methylol acrylamide in place of methacrylic acid. When tested against a control having no catalyst and a control using added p-toluene sulfonic acid catalyst, the coating that was treated with cation exchange resin gave greater package stability and physical characteristics at least equivalent to the identical latex having added catalyst.

EXAMPLE 9

A dispersion was made as follows:

| | Grams |
|---|---|
| D.I. $H_2O$ | 150 |
| Aerosol 22-S surfactant | 9.35 (American Cyanamid) |
| Triton X-405 surfactant | 1.96 (Rohm & Haas) |
| Defoamer 357 | 0.34 (Hercules, Inc.) |
| Zopaque RCL-9 | 150 (SCM Corp.) |
| Neosil A Cryptocrystalline silica | 525 (Tammsco, Inc.) |
| YLD-2288-D Monohydrate ferric oxide | 5 (Pfizer Minerals) |

A Hegman 4-5 grind was obtained after 10 minutes of dispersion. 1.0 gram of Triton X-405 was added to 110 grams of the above grind, and to this is added 30 grams of Amberlite 200 CH (with mixing) and mixed about 30 minutes. After filtering, the pH is 2.10.

To 59 grams of previously cation-exchanged sealer (pH 1.6) was added 78 grams of the above grind. The resulting paint was smooth and showed no flocculation. It was tested by drawdown with a 3 mil (76.2μm) bird coater on glass and baked 2 minutes with electric infrared to a surface temperature of 200° F. (93° C.). As soon as cool, it exhibited 71 MEK rubs to break through to substrate, and a 5 minute water spot showed no effect.

The degree of smoothness of this coating and the ability to develop full cure without catalysis were significant. The exchanged paint was stable at 130° F. (54° C.) for over 96 hours.

EXAMPLE 10

A dispersion was made as follows:

A 1-liter stainless steel dispersion pot (10 cm diameter) was fitted with a 4.5 cm high speed dispersion blade.

The following were added, in order, with low speed mixings:

| | Grams |
|---|---|
| Deionized water | 150 |
| [1]Aerosol 22 surfactant | 9.35 |
| [2]Triton X-405 surfactant | 1.86 |
| [3]Defoamer 357 | 0.34 |

After the above were added, agitation was increased to medium speed and the following were added.

| | |
|---|---|
| $TiO_2$ | 150 |
| [4]Neosil A Cryptocrystalline Silica | 525.0 |

Agitation was increased to high speed with about 50% of the silica added.

| | |
|---|---|
| [5]YLD-2288-D Monohydrate ferric oxide | 5.0 |

With everything added, high-speed dispersion was maintained for 5 minutes. A Hegman gauge dispersion of 4.5 was obtained. The dispersion blade was removed, and the dispersion was covered and set aside for later use. The pH of this dispersion was 7.7.

[1]American Cyanamid
[2]Rohm & Haas
[3]Hercules, Inc.
[4]Tammsco, Inc., Tamma, IL
[5]Pfier Minerals

EXAMPLE 11

A 550-gram sample of grind of Example 10 was put in a 1000 $cm^3$ beaker fitted with a mixing blade. Under slow agitation, 5.0 grams of Triton X-405 was added and mixed for 5 minutes.

Then 150 grams of Amberlite 200 CH cation exchange resin (Rohm & Haas Co.) was added, and mixed 30 minutes. The mixture was filtered though a coarse filter cone to remove the granular cation exchange resin.

The filtered dispersion had a pH of 2.10 and was set aside for later use.

EXAMPLE 12

(a) Latex.

An emulsion polymer was produced from the following components:

| | Grams |
|---|---|
| Deionized Water | 85.6 |
| Sodium Dihexyl Sulfosuccinate | 0.5 |
| Potassium Carbonate | 0.136 |
| Ammonium Persulfate | 0.273 |
| Sodium Bis-tridecyl Sulfosuccinate | 0.319 |
| Butyl Acrylate | 39.0 |
| Methyl Methacrylate | 39.0 |
| N-Isobutoxymethylol Acrylamide | 12.0 |
| 2-Hydroxyethyl Acrylate | 6.0 |
| Glacial Methacrylic Acid | 4.0 |
| Sodium Formaldehyde Sulfoxilate | 0.180 |
| Tertiary Butyl Hydroperoxide | 0.012 |

The emulsion polymer is prepared as follows. The monomers are polymerized in a conventional reactor using a standard procedure of metering in the main body of monomer into the heated water plus surfactant and potassium carbonate over 2- to 5-hour intervals. Batch loading of monomer is possible but not preferred. Changing the monomer composition during the feed is also possible and may lead to faster cure and/or cleaner batches. The reaction is run at 60°-86°C. The sodium formaldehyde sulfoxilate and t-butyl hydroperoxide are added after the main body of monomers have been polymerized in order that races of free monomers are reacted. The emulsion polymer latex is particularly suitable as a binder system for a paint composition. The latex has an N.V. content of 52% by weight, has a density of 8.9 lb/gallon (1066 $kg/m^3$) and a pH of 3.1.

(b) Clear coating.

A clear coating was prepared from the above latex by combining in order with mixing, the following:

| | Grams |
|---|---|
| Latex (a) | 666 |
| Cymel 1175[1] | 175 |
| Foamaster[2]O | 1 |
| Isopropanol | 34 |
| Butyl Cellosolve[3] | 20 |

[1]Dihydroxy dimethylol ethylene urea, 45% N.V. (American Cyanamide Company).
[2]Diamond Shamrock Corporation.
[3]Union Carbide Corporation.

This clear coating, with a pH of 4.2, was set aside for later use.

EXAMPLE 13

With mixing 200 grams of the clear coating of Example 12 were combined with 100 grams Amberlite 200 CH (macroreticular, strongly acidic cation exchange resin from Rohm & Haas Corporation). After stirring for 30 minutes, the coating was strained through linen cloth to remove the cation exchange resin. The product had a pH of 1.5.

The clear coating was set aside for later use.

EXAMPLE 14

The following coatings were prepared.

| | A | B | C |
|---|---|---|---|
| Dispersion of Ex. 10 | 156.0 | | 156.0 |
| Dispersion of Ex. 11 | | 156.0 | |
| Sealer of Ex. 12 | 118.0 | | 118.0 |
| Sealer of Ex. 13 | | 118.0 | |
| 40% paratoluene sulfonic acid | | | 5.5 |

pH of each coating was determined to be:

| A | B | C |
|---|---|---|
| 6.2 | 1.8 | 1.5 |

Samples of each coating were applied by a 3-mil (76.2 µ) Bird applicator to smooth glass plates and dried under electric infrared heat for two minutes to achieve a surface temperature of 225?F (107°C). as measured by an optical pyrometer. The test panels were then allowed to cool for 15 minutes and tested for solvent and water resistance.

| | A | B | C |
|---|---|---|---|
| MEK rubs<br>5 min. water spot | 2<br>Dissolved, 30 seconds | 71<br>No effect | 75<br>Softens, can be pulled from glass. |

The ion exchange paint "B" clearly exhibits superior water resistance to the acid catalyzed paint.

EXAMPLE 15

A dispersion was made as follows:

A 1-liter stainless steel dispersion pot (10 cm diameter) was fitted with a 4.5 cm. high speed dispersion blade.

The following were added, in order, with mixing:

| | Grams |
|---|---|
| Deionized Water | 78.4 |
| [1]Foamaster O | 1.85 |
| [2]Gafac PE-510 surfactant | 7.86 |
| [3]Surfynol TG surfactant | 2.74 |
| [4]Zopaque RCL-9 $TiO_2$ | 91.5 |
| [5]#1 Barytes barium sulfate pigment | 43.2 |
| [6]Neosil A crypto crystaline silica | 366.1 |
| [7]Lampblack W-7017 | 1.21 |
| Dispersion was continued at high speed until a Hegman Grind of 4.5 or greater was obtained. | |

[1]Diamond Shamrock Corp., Morristown, NJ
[2]GAF, New York, NY
[3]Air Products, Allentown, PA
[4]SCM Corp., New York, NY
[5]Pfizer Minerals, New York, NY
[6]Tammsco, Inc., Tamma, IL
[7]Harshaw Chemical Co., Cleveland, OH

100 Grams of this dispersion was added, with mixing, to 100 grams of the clear coating of Example 12. The pH of this paint was 4.9.

EXAMPLE 16

A surfactant solution was prepared by mixing in order as follows:

| | Grams |
|---|---|
| Deionized Water | 90.0 |
| Gafac PE-510 | 5.0 |
| [1]Tergitol NP-40 surfactant | 5.0 |
| The solution was stirred until completely dissolved. | |

[1]Union Carbide.

3.3 Grams of this solution was added to 200 grams of the coating of Example 15 with mixing. To this mixture was added 25.0 grams of Amberlite 200 CH ion exchange resin. This was mixed for 45 minutes until the pH stabilized at 1.65. The paint was filtered though a coarse filter cone to remove the Amberlite resin.

EXAMPLE 17

A sample of the paint of Example 16 was brush-applied to a piece of smooth hardboard and allowed to dry at room temperature, which ranged from 68° F. to 74° F. (20 to 23° C.) over the time of the test. The degree of cure was noted by checking MEK and water resistance from time to time.

| Elapsed Time After Coating | Tape Adhesion | MEK Rubs | $H_2O$ Rubs |
|---|---|---|---|
| 1 hour | Bad | 4-5 | N.D. |
| 3 hours | Fair | 7 | N.D. |
| 19 hours | Good | 15 | 100 |
| 24 Hours | Good | 25 | N.D. |
| 43 hours | Good | 25-30 | N.D. |
| 67 hours | Good | 30 | 200 |
| 9 days | N.D. | 40 | N.D. |
| 17 days | Excellent | 70 | N.D. |

The liquid coating was still fluid after 17 days, whereas the applied film developed excellent cure at the same temperature.

EXAMPLE 18

A dispersion was made as follows:

One 1-liter stainless steel dispersion pot was fitted with a 4.5 cm high-speed dispersion blade. The following were added in order with mixing:

| | Grams |
|---|---|
| Deionized Water | 73.05 |
| Foamaster O | 0.47 |
| Surfynol TG surfactant | 1.41 |
| Gafac PE 510 surfactant | 2.81 |
| [1]Polymist A-12 polyethylene wax | 72.3 |

| | Grams |
|---|---|
| Deionized water | 35.6 |
| Isopropyl alcohol | 16.0 |
| [2]Silcron G-600 fumed silica | 22.9 |

[1]Allied Chemical, Morristown, NJ
[2]SCM Corp., New York, NY

This dispersion was added with mixing to 630 grams of the clear coating of Example 12. The pH was measured at 3.85. To a 450-gram sample of this flatted clear coating was added 78.0 grams of Amberlite 200 CH ion exchange resin and mixed for 15 minutes. The coating was filtered through a coarse filter cone to remove the Amberlite resin. The pH was 1.45.

Another sample of the coating was mixed with 3.5% by weight of a 40% solution of paratoluene sulfonic acid in isopropanol. The pH was 1.3.

Samples of both were applied to sealed Leneta paper with a 3-mil (76.7 µM) Bird applicator, and baked 2 minutes in a 250° F. (121° C.) oven. After cooling, both films exhibited over 40 MEK rubs. The samples were checked for stability at room temperature.

| Elapsed Time | pH | Physical Appearance | |
|---|---|---|---|
| | | Ion-exchanged | Catalyzed |
| 1 day | 1.45 | no change | pH 1.3, very viscous |
| 2 days | 1.45 | no change | too viscous to use-nearly gelled |
| 7 days | 1.45 | no change | |
| 7½ months | 2.16 | no change still exhibits 40-50 MEK rubs cure. | |

EXAMPLE 19

The following latex contains copolymerized amine monomer as follows.

| | Weight Parts |
|---|---|
| Di Water | 93.7 |
| Butyl acrylate | 16.1 |
| Methyl methacrylate | 27.3 |
| Hydroxypropyl methacrylate | 8.76 |
| Dimethyl Amino Ethyl Methacrylate | 0.20 |

The resulting amine functional latex was mixed with tetramethylol glycoluril on a 1.5/1.0 equivalent reaction group basis latex/glycoluril. The resulting composition was treated with ion exchange resin using Amerlite 2000H. For comparison the hydroxylated latex of Example 1 was combined with tetramethylol glycoluril and treated in the same manner. Film drawdowns were prepared and baked at 250° F. (121° C.) for 3 minutes, and the results were as follows.

| | Ex. 1 | Ex. 19 |
|---|---|---|
| Waterspot<br>MEK double rubs | No effect<br>100 | softens<br>8 |

A further aspect of this invention is that ambient dry consumer trade sales latex paint compositions (wall and ceiling paints, etc.) can be formulated to produce highly desired air dry films which further cross-link over a period of time to produce substantially improved film integrity properties. Prior to this invention, conventional air dry consumer paints dried by evaporation of water and subsequent coalescence of binder polymer particles. However, such binders were merely coalesced but not crosslinked. In accordance with this invention, the binder polymer particles coalesce but then further crosslink at ambient room temperature upon the passage of several days to produce a substantially improved film. The merits of this aspect of the invention are further illustrated by the following examples.

EXAMPLE 20

A clear formulation based on the standard latex functional binder and Cymel 1172 (TMGU) along with appropriate additive was cation exchanged to a pH of 1.7. A sample of that material was coated with a 2-mil (50.8 µm) Bird applicator on sealed Leneta paper. The wet sample still showed a pH of 1.7. Temperature in the room was steady at 75°F. (24°C.); relative humidity fluctuated around 26-30%. The dried film was tested and monitored by MEK and water rubs, where N.D. means Not Determined.

| Elapsed Time | MEK Rubs | Water Rubs |
|---|---|---|
| 2.5 hrs. | 20-25 | 135 |
| 4 hrs. | 39 | 200 soften |
| 20 hrs. | 70 | 200 sl. soften |
| 24 hrs. | 75 | N.D. |
| 7 days | 75 | 200 no effect |
| 14 days | 135 | N.D. |

This demonstrates that very good solvent resistance and reasonable water resistance can be obtained in only a day at room temperature.

The same clear coating was applied to Leneta paper with a 2-mil (50.8 µm) Bird applicator (1.3-1.5 mils (33-38 µm) dry film measured) and the panels were immediately put into a refrigerator at 40°F. (5°C.), 28% RH while still wet. Within 1 hour the films had coalesced. Cure was monitored as before.

| Elapsed Time | MEK Rubs | Water Rubs |
|---|---|---|
| 2 hrs. | 5 | N.D. |
| 5 days | 15 | 52 |
| 6 days | 19 | 80 |

At this time the panels were removed and left in the open room and further tested (75°F. [24°C.], 22% RH).

| | | |
|---|---|---|
| 1.25 hrs. | 20 | 200 soften |
| 2.25 hrs. | 49 | N.D. |
| 3.75 hrs. | 46 | 200 - no soften |
| 5.5 hrs. | 55 | N.D. |
| 24 hrs. | 104 | 200 - no soften |

This demonstrates that the cure proceeds slowly at 40° F. (5° C.), but accelerates when warmed up. This indicates that trade sales coatings can be applied at low temperatures to develop some cure, and when the area later warmed up the crosslinking reaction would proceed quickly to completion.

The same coating was tested to better characterize cure at these low temperatures. A temperature gradient plate (commonly called an MFT bar) was used. It has 5 grooves about 1 inch (25.4mm) wide and several mils thick cut into the surface linearly across a temperature range from about 4° C. to about 45° C. Dry air constantly sweeps across the surface. Temperature probes indicate the temperature at 7 locations across the gradient.

All 5 grooves were filled with the clear coating used in this Example 20. Water and MEK rubs were measured at different temperatures on one groove each ½ hour.

| MEK/WATER RUBS @ TEMP., DEGREES C. | | | | | | | |
|---|---|---|---|---|---|---|---|
| Elapsed Time | 4C | 9C | 16C | 22C | 28C | 34C | 43C |
| 0.5 hr | 5/8 | 17/18 | 20/30 | 44/200+ | 80/200+ | 85/200+ | 97/200+ |
| 1 hr | 9/8 | 26/20 | 60/168 | 83/200+ | 100+/ND | 100+/ND | 100+/ND |
| 1.5 hr | 17/15 | 38/200+ | 85/ND | 100+/ND | 100+/ND | 100+/ND | 100+/ND |
| 2 hr | 20/30 | 57/170 | 100+/ND | 100+/ND | 100+/ND | 100+/ND | 100+/ND |
| 2.5 hr | 30/50 | 100+/200+ | 100+/ND | 100+/ND | 100+/ND | 100+/ND | 100+/ND |

This demonstrates that the degree of cross-linking cure is temperature dependent, but some cure occurs even at 4° C.

In a similar manner, a white pigmented coating was prepared and cation exchanged to a pH of 1.8. A baked sample was first tested to show that full cure gave about 25 MEK rubs from a 2 mil (50.8 µm) Bird-applied film. Ambient cures were checked as follows.

| Elapsed Time | MEK Rubs | Water Rubs |
|---|---|---|
| 0.5 hr | 6 | 7 |
| 15.5 hr | 15 | 200 soften |
| 21.25 hr | 23 | 200 no soften |
| 24 hr | 20 | N.D. |
| 10 days | 23-28 | N.D. |

Overnight the pH of the wet paint sample drifted to 2.3. Part of the sample was cation reexchanged to a pH of 1.9. Both were coated and tested for ambient cure.

| Elapsed Time | pH 1.9 | | pH 2.3 | |
|---|---|---|---|---|
| | MEK Rubs | Water Rubs | MEK Rubs | Water Rubs |
| 0.5 hrs | 5 | 5 | 5 | 4 |
| 1 hr | 8 | 11 | 4 | 5 |
| 4 hrs | 12 | 35 | 7 | 11 |
| 7 hrs | 12 | 200 soften | 7 | 22 |
| 6 days | 20 | N.D. | 23 | 200 |
| 9 days | 22-24 | N.D. | 17-21 | N.D. |

In accordance with a preferred aspect of this invention, the ion-exchange process for removing undesirable cations from the polymeric binder is utilized in conjunction with specific opacified pigments substantially free of cations or cationic surface treatment. The cationic-free opacified pigments comprise untreated rutile and anatase titanium dioxide, preferably anatase, or conventional surface treated commercial titanium dioxide rutile or anatase pigments with the cationic surface treatment removed to eliminate the cation rich pigment surfaces. By using untreated titanium dioxide or conventional titanium dioxide with cationic surface treatments removed, the pH drift is stabilized and commercially useful light color paints can be produced. Excellent room temperature cures can be achieved. Anatase titanium dioxide, free of surface cations, particularly enables a substantially improved cure and cross-linking of the thermosetting paint

coating. A further advantage of cation-free anatase is that the resulting pigmented paint coating is substantially free of thixotropic properties. These and other advantages of this aspect of the invention are illustrated by the following illustrative examples.

EXAMPLE 21

Rutile titanium dioxide was obtained without surface treatment and substantially free of cations. The pigment was merely washed, micronized, and filtered without any surface treatment. The cation-free titanium dioxide was incorporated into a polymeric binder comprising reactive latex and glycoluril at a level of 200 pounds pigment per 100 gallons latex (240 kg pigment per $m^3$ of latex). This is identified below as Grind #2. This paint was compared with similarly prepared paint using conventional commercial titanium dioxide having a surface treatment containing aluminum oxide. This is identified below as "Grind #1."

| Letdown | Grams | |
|---|---|---|
| acrylic copolymer latex | 374.08 | |
| glycoluril (Cymel 1172) | 98.2 | |
| Defoamer | 1.0 | |
| butyl carbitol acetate | 20.0 | |
| | Grind #1 | Grind #2 |
| D.I. Water | 65.0 | 65.0 |
| Defoamer | 0.40 | 0.40 |
| Surfactant | 4.5 | 4.5 |
| Polyethylene surfactant | 4.5 | 4.5 |
| | PH = 2 | PH = 2 |
| surface treated $TiO_2$ | 105.2 | |
| | PH = 3.60 | |
| Cation free $TiO_2$ | | 105.2 |
| | | PH = 2 |
| Silica | 250.4 | 250.4 |
| | PH = 5.16 | PH = 3.75 |
| D.I. Water | 4.5 | 4.5 |
| Combine each #1 and #2 with 246.5 grams letdown | | |
| | PH = 4.74 | PH = 4.02 |

Improved PH Stability on $TiO_2$-Containing Cation Exchange Coatings

Sample coatings #1 and #2 comprising about 450 gms. of each coating were put in 1-liter beakers. With mixing, 100 gms. of amberlite, 200 CH cation exchange resin was added to each. After 30 minutes of mixing, the samples were filtered to remove exchange resin, and tested as follows:

| | Sample #1 | Sample #2 |
|---|---|---|
| PH, init. | 2.07 | 1.90 |
| After 1 hour | 2.23 | 1.90 |
| After 1-3/4 hours | 2.31 | 1.89 |
| After 64 | 3.02 | 2.35 |

The experimental cation-free titanium dioxide gave superior stability. Immediately after treatment, both were applied on sealed leneta paper with a 3 mil (76.7 µm) bird coater, and baked 2 min. @ 250° F. (127° C.).

Sample #1 gave 20-22 MEK rubs; Sample #2 gave 40 MEK rubs, indicating a better cure.

Additional samples were similarly coated and allowed to dry ambient (75° F. [24° C.], 16% RH.)

| | Sample 1 | | | Sample 2 | |
|---|---|---|---|---|---|
| | Water Rubs | MEK Rub | | Water Rubs | MEK Rubs |
| 1 hour (approx.) | 22 | 8 | 50 min. | 70 | 16 |
| 1½ hr. | 28 | 9 | 70 min. | 200 soften | 20 |
| 66 hrs. | 200, no soften | 15 | 2 hr. | 200 soften | 21 |
| | | | 66 hrs. | 200, no soften | 28 |

After 4 days, additional air-dry samples were tested, with the coatings. Sample #1 had a 3.05 PH and Sample #2 had a 2.36 PH.

| | Sample 1 | | Sample 2 | |
|---|---|---|---|---|
| | Water Rubs | MEK Rub | Water Rubs | MEK Rubs |
| 1 hour | 6 | 6 | 10 | 7 |
| 2 hours | 16 | 7 | 20 | 10 |
| 5 hours | 18 | 10 | 26 | 14 |
| 8.5 hrs. | 18 | 9 | 119 | 19 |

This demonstrated that cation-free titanium dioxide is better than standard surface treated titanium dioxide.

The following examples illustrate the advantages of untreated, cation-free anatase over untreated cation-free, rutile titanium dioxide.

EXAMPLE 22

| Raw Material | Weight |
|---|---|
| Acrylic copolymer latex | 374 |
| Premix stabilizer (surfactant) | 25 |
| Defoamer | 1 |
| D.I. Water | 149 |

| Grind | Weight |
|---|---|
| D.I. Water | 139 |
| Defoamer | 1 |
| Surfactant | 9 |
| Polyethylene oxide surfactant | 9 |
| Titanium dioxide (no surface treatment) | 210 |
| Silica | 501 |

Add grind to letdown and mix 16 hours minimum. After mixing 16 hours, a pH probe was put in the paint. Small quantities of amberlite 200 CH (protonated cation exchange resin from Rohm & Haas) were added. When pH stabilized, samples were pulled, and applied by 3 mil. (76.7 µm)bird coater to leneta paper; baked 2 minutes @ 250° F. (127° C.) hot air. Cure was checked each time. After completion, the sample was aged and periodically checked for pH and cure:

| Total gms. exchange resin Added, cumulative | Stabilized pH | Cure MEK Rubs |
|---|---|---|
| 0 | 4.63 | <5 |
| 10.0 | 3.45 | 14-17 |
| 10.0 | 3.20 | 16-18 |
| 15.0 | 3.00 | 27-28 |
| 42.0 | 2.20 | 53-55 |
| 68.0 | 2.01 | 78-95 |
| 95.0 | 1.99 | 83-110 |
| Aged 96 hrs. @ R.T. | 2.92 | 83-110 |
| Aged 96 hrs. @ 120° F. (49° C.) | 3.24 | 83-110 |

EXAMPLE 23

A comparable paint was made, but with the rutile $TiO_2$ replaced by anatase $TiO_2$ and indicating during exchange, little, if any, thixotropy developed.

The stability/cure on this paint is:

| | Storage Conditions | | | |
|---|---|---|---|---|
| | Room Temp. PH | Room Temp. MEK | 120° F. (49° C.) PH | 120° F. (49° C.) MEK |
| Initial | 1.74-1.80 | 220 - 230 | H.A. | N.A. |
| 68 hrs. | 1.87 | 220 - 250 | 1.82 | 220-250 |
| 93 hrs. | 1.84 | N.A. | 1.92 | N.A. |
| 117 hrs. | 1.88 | N.A. | 1.95 | N.A. |
| 141 | 1.90 | N.A. | 1.93 | N.A. |
| 11 | 1.98 | 390 | 2.07 | 390 |

Accelerated heat aging is not diminishing the cure on this coating. Furthermore, while heataged rutile samples show noticeable thixotropy, there is no viscosity build with the anatase sample, and no thixotropy is noted.

Further, when both were applied to water-stained hardboard, the anatase-bearing paint showed very little stain bleed, while the rutile samples showed some stain bleed.

**Claims**

**1.** A process for the production of a functionally reactive emulsion polymer by copolymerizing functional-group containing ethylenically unsaturated monomers in an aqueous medium characterized in that said functional-group-containing ethylenically unsaturated monomers do not include amine monomers and that the functional emulsion polymer is treated with an ion exchange resin to remove cations and produce a product having a pH of less than 2.5.

**2.** A process according to claim 1, wherein the reactive emulsion polymer is mixed with a glycoluril derivative prior to the step of treating with an ion exchange resin.

**3.** A process according to claim 1, wherein glycoluril is treated separately with an ion exchange resin and thereafter mixed with the reactive emulsion polymer treated with the ion exchange resin.

**4.** A process according to any of the preceding claims, wherein the ion exchange resin is a protonated cation exchange resin.

**5.** A process according to any one of the preceding claims, wherein said ethylenically unsaturated monomer is selected from acrylic, styrene acrylic, vinyl acetate, vinyl chloride and vinylidene chloride or mixtures thereof, said emulsion polymer having a reactive functionality selected from the group consisting of hydroxyl, carboxyl, amido or methylolamido adapted to react with said glycoluril crosslinking agent, said emulsion polymer being free of amine groups.

6. A process according to claim 5, wherein said emulsion copolymer is subjected to treatment with an ion exchange resin in admixture with a glycoluril crosslinking agent adapted to cure with said emulsion copolymer wherein said mixture comprises 5 to 60% of said glycoluril crosslinking agent at 40 to 95% of said emulsion copolymer.

7. A process according to claim 2 or any of claims 3-6 when dependant upon claim 2 wherein said glycoluril is a methylolated glycoluril containing from 1 to 4 methylol groups.

8. A process according to any one of the preceding claims, wherein said ethylenically unsaturated monomers comprise on a weight basis between 0% and 10% carboxylic monomer, 2% and 20% alkylhydroxy acrylate or methacrylate monomer, and the balance being other ethylenically unsaturated monomer comprising monomers selected from vinyl monomers, styrene monomers or acrylate monomers.

9. The process of claim 7, wherein the glycoluril comprises dihydroxy dimethylol ethylene urea.

10. The process of claim 8, wherein the emulsion polymer is unpigmented and having a pH on the basic side which on treatment with the cation exchange agent is converted to acid latex.

11. A process according to any one of the preceding claims, wherein the product is a latex having a pH of less than 2.5 that does not gel or destabilize at room temperature but is heat curable at from 60 to 350° F. (18-176° C.) without addition of acid cure catalyst.

12. A coating composition substantially free of cations comprising by weight between 20% and 95% emulsion polymer and between 5% and 80% glycoluril, said emulsion polymer containing reactive hydroxy, carboxyl, or acrylamide groups adapted to be coreactive with glycoluril, where said emulsion polymer is free of amine groups, said composition produced by treating the coating composition with ion exchange resin to substantially remove the cations from the emulsion polymer and the glycoluril.

13. A coating composition according to claim 12, which produces an ambient drying coating preferably as a result of a cure resulting from coalescence of the reactive emulsion polymer and by cross-linking between the reactive emulsion polymer and glycoluril.

14. A coating composition according to either of claims 12 and 13, which contains an opacifying agent that is substantially free of cations, said opacifying agent preferably being titanium dioxide, more preferably anatase.

**Revendications**

1. Un procédé pour la production d'un polymère en émulsion fonctionnellement réactif par copolymérisation de monomères éthyléniques à groupes fonctionnels dans un milieu aqueux, caractérisé en ce que lesdits monomères éthyléniques à groupes fonctionnels ne contiennent pas de monomères aminés et en ce que le polymère en émulsion fonctionnel est traité par une résine échangeuse d'ions pour séparer les cations et produire un produit ayant un pH de moins de 2,5.

2. Un procédé selon la revendication 1, dans lequel le polymère réactif en émulsion est mélangé avec un dérivé de glycolurile avant l'étape de traitement par une résine échangeuse d'ions.

3. Un procédé selon la revendication 1, dans lequel le glycolurile est traité séparément par une résine échangeuse d'ions et ensuite mélangé avec le polymère réactif en émulsion traité par la résine échangeuse d'ions.

4. Un procédé selon l'une quelconque des revendications précédentes, dans lequel la résine échangeuse d'ions est une résine échangeuse de cations protonée.

5. Un procédé selon l'une quelconque des revendications précédentes, dans lequel ledit monomère éthylénique est choisi parmi les monomères acryliques, les styrènes acryliques, l'acétate de vinyle, le chlorure de vinyle et le chlorure de vinylidène ou leurs mélanges, ledit polymère en émulsion ayant

une fonctionnalité réactive choisie parmi les groupes hydroxyles, carboxyles, amido et méthylolamido adaptée pour réagir avec ledit agent réticulant glycolurile, ledit polymère en émulsion é tant exempt de groupes amino.

6. Un procédé selon la revendication 5, dans lequel ledit copolymère en émulsion est soumis à un traitement par une résine échangeuse d'ions en mélange avec un agent réticulant glycolurile adapté pour durcir ledit copolymère en émulsion dans lequel ledit mélange comprend 5 à 60 % dudit agent réticulant glycolurile et 40 à 95 % dudit copolymère en émulsion.

7. Un procédé selon la revendication 2 ou l'une quelconque des revendications 3-6 lorsqu'elles dépendent de la revendication 2, dans lequel ledit glycolurile est un glycolurile méthylolé contenant de 1 à 4 groupes méthylol.

8. Un procédé selon l'une quelconque des revendications précédentes, dans lequel lesdits monomères éthyléniques comprennent en poids entre 0 et 10 % de monomère carboxylique, entre 2 et 20 % d'hydroxyalkyle acrylate ou méthacrylate monomère et le reste étant un autre monomère éthylénique comprenant des monomères choisis parmi les monomères vinyliques, les monomères styréniques ou les monomères acrylates.

9. Le procédé selon la revendication 7, dans lequel le glycolurile comprend la dihydroxydiméthyloléthylèneurée.

10. Le procédé selon la revendication 8, dans lequel le polymère en émulsion est non pigmenté et il a un pH du côté basique qui par traitement par l'agent d'échange de cations est transformé en un latex acide.

11. Un procédé selon l'une quelconque des revendications précédentes, dans lequel le produit est un latex ayant un pH de moins de 2,5 qui ne se gélifie pas ou ne se déstabilise pas à la température ambiante mais qui est durcissable à la chaleur à 18-176 °C (60-350 °F) sans addition de catalyseur acide de durcissement.

12. Une composition de revêtement pratiquement exempte de cations comprenant en poids entre 20 et 95 % de polymère en émulsion et entre 5 et 80 % de glycolurile, ledit polymère en émulsion contenant des groupes hydroxyles, carboxyles ou acrylamides réactifs adaptés pour être coréactifs avec le glycolurile, ledit polymère en émulsion étant exempt de groupes amino, ladite composition produite en traitant la composition de revêtement par une résine échangeuse d'ions pour séparer substantiellement les cations du polymère en émulsion et du glycolurile.

13. Une composition de revêtement selon la revendication 12, qui produit un revêtement séchant à température ambiante résultant de préférence d'un durcissement résultant de la coalescence du polymère réactif en émulsion et par réticulation entre le polymère réactif en émulsion et le glycolurile.

14. Une composition de revêtement selon l'une quelconque des revendications 12 et 13, qui contient un agent opacifiant qui est pratiquement exempt de cations, ledit agent opacifiant étant de préférence le dioxyde de titane, mieux encore l'anatase.

**Patentansprüche**

1. Verfahren zur Herstellung eines funktionell reaktionsfähigen Emulsionspolymers durch Copolymerisieren einer funktionellen Gruppe, welche ethylenisch ungesättigte Monomere in einem wäßrigen Medium enthält, dadurch gekennzeichnet, daß die eine funktionelle Gruppe enthaltenden ethylenisch ungesättigten Monomere keine Aminmonomere enthalten, und daß das funktionelle Emulsionspolymer mit einem Ionenaustauschharz behandelt wird, um Kationen zu entfernen und ein Produkt herzustellen, das einen pH-Wert von weniger als 2,5 besitzt.

2. Verfahren nach Anspruch 1, dadurch gekennzeichnet, daß das reaktionsfähige Emulsionspolymer mit einem Glycolurilderivat gemischt wird, bevor es mit einem Ionenaustauschharz behandelt wird.

3. Verfahren nach Anspruch 1, dadurch gekennzeichnet, daß Glycoluril eigens mit einem Ionenaustauschharz behandelt wird und anschließend mit dem reaktionsfähigen Emulsionspolymer gemischt wird, welches mit dem Ionenaustauschharz behandelt wurde.

4. Verfahren nach einem der vorhergehenden Ansprüche, dadurch gekennzeichnet, daß das Ionenaustauschharz ein protonisiertes Kationenaustauschharz ist.

5. Verfahren nach einem der vorhergehenden Ansprüche, dadurch gekennzeichnet, daß das ethylenisch ungesättigte Monomer ausgewählt ist aus Acryl, Styrolacryl, Vinylacetat, Vinylchlorid und Vinylidenchlorid oder Mischungen derselben, wobei das Emulsionspolymer eine reaktionsfähige funktionelle Gruppe besitzt, die ausgewählt ist aus der Gruppe umfassend Hydroxyl, Carboxyl, Amido oder Methylolamido, die in der Lage sind, mit dem Glycolurilvernetzungsmittel zu reagieren, wobei das Emulsionspolymer frei von Amingruppen ist.

6. Verfahren nach Anspruch 5, dadurch gekennzeichnet, daß das Emulsionscopolymer einer Behandlung mit einem Ionenaustauschharz unterzogen wird in Beimischung mit einem Glycolurilvernetzungsmittel, welches in der Lage ist, mit dem Emulsionscopolymer auszuhärten, wobei die Mischung 5 bis 60% des Glycolurilvernetzungsmittels enthält bei 40 bis 95% des Emulsionscopolymers.

7. Verfahren nach Anspruch 2 oder nach einem der Ansprüche 3 bis 6, wenn diese von Anspruch 2 abhängen, dadurch gekennzeichnet, daß das Glycoluril ein methyloliertes Glycoluril ist, welches 1 bis 4 Methylolgruppen enthält.

8. Verfahren nach einem der vorhergehenden Ansprüche, dadurch gekennzeichnet, daß die ethylenisch ungesättigten Monomere auf Gewichtsbasis zwischen 0% und 10% Carboxylmonomer enthalten, zwischen 2% und 20% Alkylhydroxyacrylat- oder -methacrylatmonomer, und der Rest ist ein sonstiges ethylenisch ungesättigtes Monomer, welches Monomere enthält, die ausgewählt sind aus Vinylmonomeren, Styrolmonomeren oder Acrylatmonomeren.

9. Verfahren nach Anspruch 7, dadurch gekennzeichnet, daß das Glycoluril Dihydroxydimethylolethylenharnstoff enthält.

10. Verfahren nach Anspruch 8, dadurch gekennzeichnet, daß das Emulsionspolymer unpigmentiert ist und einen pH-Wert im basischen Bereich hat, so daß es bei Behandlung mit dem Kationenaustauscher in saures Latex umgewandelt wird.

11. Verfahren nach einem der vorhergehenden Ansprüche, dadurch gekennzeichnet, daß das Produkt ein Latex ist mit einem pH-Wert von weniger als 2,5, welches bei Zimmertemperatur nicht geliert oder instabil wird, sondern bei einer Temperatur von 18 - 176 °C ohne Zugabe eines sauren Härtekatalysators wärmevulkanisierbar ist.

12. Überzugszusammensetzung, die im wesentlichen frei ist von Kationen und zwischen 20 und 95 Gew.-% Emulsionspolymer und zwischen 5 und 80 Gew.-% Glycoluril enthält, wobei das Emulsionspolymer reaktionsfähige Hydroxy-, Carboxyl- oder Acrylamidgruppen enthält, die in der Lage sind, zusammen mit dem Glycoluril zu reagieren, dadurch gekennzeichnet, daß das Emulsionspolymer frei von Amingruppen ist, wobei die Zusammensetzung hergestellt wird durch Behandeln der Überzugszusammensetzung mit Ionenaustauschharz, um im wesentlichen die Kationen von dem Emulsionspolymer und dem Glycoluril zu entfernen.

13. Überzugszusammensetzung nach Anspruch 12, wo ein lufttrocknender Überzug vorzugsweise infolge eines Aushärtens aufgrund einer Verschmelzung des reaktionsfähigen Emulsionspolymers und durch Vernetzung zwischen dem reaktionsfähigen Emulsionspolymer und dem Glycoluril entsteht.

14. Überzugszusammensetzung nach einem der Ansprüche 12 und 13, welcher ein Trübungsmittel enthält, das im wesentlichen frei ist von Kationen, wobei das Trübungsmittel vorzugsweise Titandioxid, am besten Anatas ist.